# EUROPÄISCHE PATENTANMELDUNG

(11) **EP 1 057 511 A1**
(43) Veröffentlichungstag der Anmeldung: **06.12.2000**
(21) Anmeldenummer: 99810471.5
(22) Anmeldetag: 31.05.1999
(51) Int. Cl.: B01D 29/01, B01D 29/11, B01D 29/44, D21D 5/16

(54) **Siebvorrichtung**

(71) Anmelder: Sulzer Metco AG, 5610 Wohlen (CH)
(72) Erfinder: Blank-Bewersdorff, Margret Dr., 8400 Winterthur (CH)
(74) Vertreter: Sulzer Management AG

(57) **Zusammenfassung**

Die Siebvorrichtung enthält Befestigungselemente (1) und eine Vielzahl von Stäben (2), die mit den Befestigungselementen verbunden sind und einen Siebspalt bilden. Die Stäbe (2) sind mit Vertiefungen (3) auf die Befestigungselemente (1) aufgesetzt und mittels eines Lötverfahren verbunden.

Die Ausbildung der Stäbe (2) mit den Vertiefungen (3) ermöglicht eine Herstellung der Siebe mit variabler Spaltweite und der Ausbildung als Plattensieb, Bogensieb oder Siebkorb mit dem gleichen Ausgangsmaterial (17).

## Beschreibung

Die Erfindung betrifft eine Siebvorrichtung gemäss dem Oberbegriff des Anspruches 1.

Aus der EP-A-0 567 726 ist eine derartige Siebvorrichtung mit spaltförmigen Öffnungen bekannt. Die Siebvorrichtung weist eine Vielzahl von Stäben, die parallel ausgerichtet sind und zwischen welchen sich Sortierspalten oder Sortierschlitze befinden und Verstärkungselemente auf, mit denen mehrere oder alle Stäbe verbunden sind.

Hierzu sind Vertiefungen in den Verstärkungselementen ausgebildet, in welche die Stäbe eingesetzt sind. Die Stäbe sind mittels eines Hochtemperatur-Lötverfahren mit den Stäben verbunden, wobei die Verbindung durch Diffusion eines Lotes in die zu verbindenden Bereiche erfolgen kann. Dies setzt voraus, dass der Verbindungsbereich des Stabes und der Vertiefung die gleiche Kontur aufweisen. Die bei derartigen Siebvorrichtungen vorausgesetzte hohe Präzision der Schlitzform stellt hohe Anforderungen an die Herstellung der Verstärkungselemente und setzt ein besonderes Herstellungsverfahren, z.B. Elektroerosion voraus.

Hierzu ist ein beträchtlicher Aufwand erforderlich, welche die Herstellung der Siebvorrichtung insgesamt verteuert.

Die Erfindung liegt die Aufgabe zugrunde, eine Siebvorrichtung mit hoher Präzision zu schaffen, die mit wirtschaftlich günstigen Aufwand herzustellen ist.

Diese Aufgabe wird durch die im Kennzeichen des Anspruches 1 genannten Merkmale gelöst.

Dadurch, dass die Stäbe mit Vertiefungen versehen sind, ergibt sich eine Herstellung der Siebe unabhängig von der Spaltweite und der Ausbildung als Plattensieb, Bogensieb oder Siebkorb.

Weitere vorteilhafte Massnahmen und bevorzugte Ausgestaltungen der Erfindung ergeben sich aus den abhängigen Ansprüchen.

Nachfolgend wird die Erfindung anhand der beiliegenden Zeichnungen erläutert.

Es zeigen:
- Fig. 1: Eine schematische Darstellung einer Einrichtung zur Herstellung von Stäben;
- Fig. 2: einen Schnitt entlang der Linie II-II in Fig. 1;
- Fig. 3: eine räumliche Darstellung eines Stabes nach dem Bearbeitungsschritt Umformen;
- Fig. 4: ein Schnitt entlang der Linie IV-IV in Fig. 1;
- Fig. 5: eine räumliche Darstellung eines Stabes nach dem Bearbeitungsschritt Schleifen;
- Fig. 6: einen Abschnitt einer Ausführung einer Siebvorrichtung und
- Fig. 7: einen Abschnitt einer weiteren Ausführung einer Siebvorrichtung.

Die hier in Rede stehenden Siebvorrichtung bestehen im Wesentlichen aus mindestens zwei Verstärkungselemente 1 und eine Vielzahl von Stäben 2, die einen polygonen Querschnitt haben. Die Stäbe 2 sind auf den Verstärkungselementen 1 befestigt, so dass jeweils ein Sortierspalt 3 zwischen benachbarten Stäben 2 gebildet sind. Hierzu sind die Stäbe mit einer Vertiefung 4 versehen.

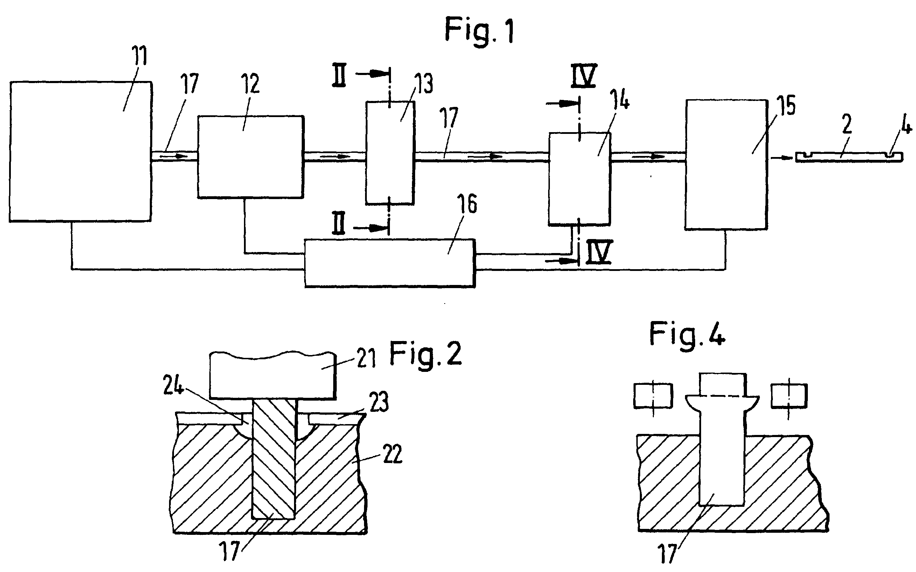

Zur Herstellung der Stäbe 2 kann die in Fig. 1 schematisch dargestellte Einrichtung verwendet werden. Diese Einrichtung enthält ein Vorratsbehältnis (z.B. Coil), eine Zuführvorrichtung 11, eine Fördervorrichtung 12 mit einer Einrichtung zum Richten, eine Umformvorrichtung 13, eine Schleifvorrichtung 14, eine Schneidvorrichtung 15 und eine Steuervorrichtung 16, die einander zugeordnet sind, so dass eine kontinuierliche und automatische Herstellung möglich ist.

Als Ausgangsmaterial wird ein gezogenes Profil aus einem verformbaren Werkstoff, insbesondere austenitischen Stahl verwendet, das hochkant gewickelt in der Zuführvorrichtung 11 angeordnet wird. Das Profil 17 wird in die Fördervorrichtung 12 eingeführt und von dieser kontinuierlich vom Wickel abgezogen. Mit dem der Fördervorrichtung zugeordneten Einrichtung zum Richten wird das gezogene Profil gerichtet, so dass es die Fördereinrichtung als gerades Profil verlässt und der Umformvorrichtung 13 zugeführt wird. In dieser Umformvorrichtung 13 wird in das Profil 17 eine Vertiefung 4 ausgebildet. In der Schleifvorrichtung 14 wird die zuvor im Profil 17 ausgebildete Vertiefung durch Schleifen bearbeitet. Abschliessend wird das Profil in der Schneidvorrichtung abgeschnitten, wodurch ein Stab 2 für die Siebvorrichtung fertiggestellt ist. Anstelle der Schleifvorrichtung kann z.B. auch eine Fräsvorrichtung vorgesehen werden.

Bei der Herstellung der Stäbe ist die Umformung des Profils 17 von Bedeutung. Wie die Fig. 2 zeigt, enthält die Umformvorrichtung 13 einen Stempel 21 und einen Gegenstempel 22. Der Stempel 21 weist einen rechteckigen Querschnitt auf, dessen Breite leicht grösser ist als die Dicke des Verstärkungselementes 1. Der Gegenstempel 22 weist einen Spalt 23 und eine Ausnehmung 24 auf, die zum Stempel 21 hin offen ist.

Das gezogene Profil 17 besteht aus einem plastisch verformbaren Stahl, z.B. rostfreien Stahl. Die Ausbildung der Vertiefung 4 erfolgt durch Umformen, wodurch unter Verdrängung des Materials die Vertiefung in Form einer quer zur Längserstreckung des Profils 17 angeordneten Ausnehmung 23 und eine die Form der Ausnehmung 24 aufweisende Wulst 25 ausgebildet wird, wie dies in der Fig. 3 dargestellt ist.

Aus dem vorstehenden ist erkennbar, dass die Herstellung der Vertiefung 3 im Vergleich zu den bekannten Siebvorrichtungen sehr einfach und kostengünstig ist.

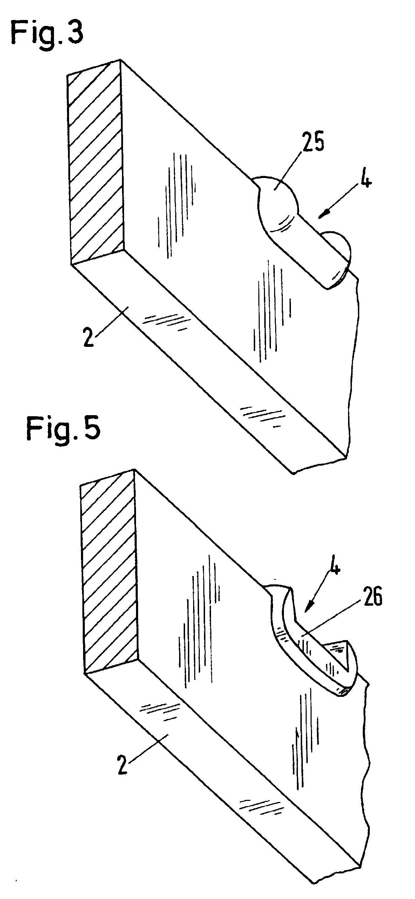

Wie die Fig. 4 zeigt, wird in der Schleifvorrichtung 14 die beidseits des Profils 17 ausgebildete Wulst 25 bearbeitet, so dass eine plane Fläche 26 an jeder Wulst 25 ausgebildet wird (Fig. 5). Das Schleifen erfolgt mittels Schleifscheiben 27 oder dgl. gleichzeitig.

Schliesslich wird durch die Trennvorrichtung 15 die entsprechende Länge abgetrennt, welche als Stab 2 in der Siebvorrichtung verwendet wird.

Siebvorrichtungen der hier in Rede stehenden Art können als Plattensiebe, wie vorstehend beschrieben sowie als Bogensiebe oder Siebkörbe ausgebildet sein.

Zur Herstellung der Siebvorrichtung werden eine Anzahl von Stäben 2 auf das Verstärkungselement 1 so angeordnet, dass der Stab 2 das Verstärkungselement teilweise umgreift und mit den Verstärkungselement 1 verbunden, z.B. mittels Löten, wobei ein Hochtemperatur-Lötverfahren bevorzugt wird.

Hierbei wird ein Nickel-Basislot bevorzugt und eine Löttemperatur im Bereich oberhalb 950°C bevorzugt angewendet. Das Löten kann in einem Vakuum oder einer Schutzgasatmosphäre durchgeführt werden. Die Verbindung der Stäbe mit dem Verstärkungselement erfolgt durch Diffusion des Lotes in den zu verbindenden Bereich.

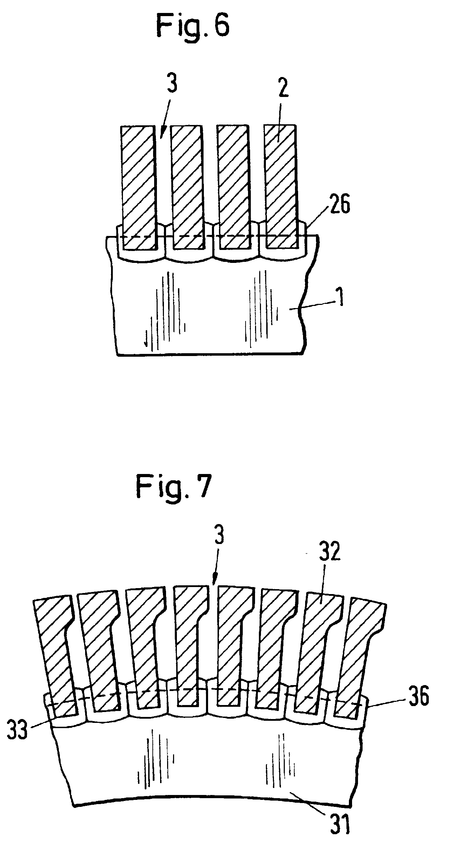

Wie die Fig. 6 zeigt, sind bei einem Plattensieb die Stäbe 2 mit den Flächen 26 aneinanderliegend auf einem geraden Verstärkungselement 1 befestigt. Für diese Ausführung der Siebvorrichtung werden im Bearbeitungsschritt Umformen die Bodenfläche der Vertiefung eben und parallel zu den Flächen der Schmalseite des Profils 17 und im Bearbeitungsschritt Schleifen die Flächen 26 exakt parallel und mit einem bestimmten Abstand ausgebildet, wobei dieser Abstand die Weite des Sortierspaltes 3 bestimmt. Die durch den Bearbeitungsschritt Schleifen erzeugten Flächen gewährleisten eine genaue Spaltweite zwischen den Stäben 2, wodurch die Herstellung der Siebvorrichtung in vorteilhafter Weise im Sinne einer kostengünstigen Herstellung erleichtert wird.

Die Fig. 7 zeigt einen Abschnitt eines Bogensiebes mit einem bogenförmigen Verstärkungselement 31 und mit Stäben 32, die nach dem vorstehend beschriebenen Verfahren hergestellt worden sind. Für diese Ausführung der Siebvorrichtung werden im Bearbeitungsschritt Umformen die Bodenfläche der Vertiefung 33 entsprechend dem Aussendurchmesser der Verstärkungselemente bogenförmig und im Bearbeitungsschritt Schleifen die Flächen 36 schräg zu den Flächen der Längsseite des Profils 17 ausgebildet. Dadurch stehen die Stäbe 32 in radialer Richtung vom Verstärkungselement 31 ab.

Die Siebvorrichtung enthält Befestigungselemente 1 und eine Vielzahl von Stäben 2, die mit den Befestigungselementen verbunden sind und einen Siebspalt bilden. Die Stäbe 2 sind mit Vertiefungen 3 auf die Befestigungselemente 1 aufgesetzt und mittels eines Lötverfahren verbunden.

Die Ausbildung der Stäbe 2 mit den Vertiefungen 3 ermöglicht eine Herstellung der Siebe mit variabler Spaltweite und der Ausbildung als Plattensieb, Bogensieb oder Siebkorb mit dem gleichen Ausgangsmaterial 17.

## Patentansprüche

1. Siebvorrichtung mit spaltförmigen Öffnungen für das Sortieren von Fasersuspensionen oder dgl. mit einer Vielzahl von im Wesentlichen parallel ausgerichteten Stäben zwischen denen sich Sortierspalten (3) oder Sortierschlitze befinden und welche durch mit ihnen verbundene Verstärkungselemente fixiert werden, wobei die Verstärkungselemente mehrere oder alle an der Siebvorrichtung vorhandenen Stäbe mittels einem Lötverfahren verbunden sind, dadurch gekennzeichnet, dass die Stäbe (2, 32) aus plastisch verformbaren Material bestehen und dass die Stäbe (2, 32) mittels plastischer Verformung erzeugte Vertiefungen (3) aufweisen, derart, dass mindestens an einer Seite der Vertiefung eine durch Materialverdrängung gebildete Wulst (25) vorhanden ist.

2. Vorrichtung nach Anspruch 1, dadurch gekennzeichnet, dass die Wulst (25) mit einer planen Fläche (26, 36) versehen ist, derart, dass ein Ansatz am Stab vorhanden ist, um den Sortierspalt (3) zu bilden.

3. Siebvorrichtung nach Anspruch 1 oder 2, dadurch gekennzeichnet, dass die Verstärkungselemente (1) als Leisten ausgebildet sind, so dass die Siebvorrichtung ein Flachsieb oder dgl. ist.

4. Siebvorrichtung nach Anspruch 1 oder 2, dadurch gekennzeichnet, dass die Verstärkungselemente (1) als Ringe ausgebildet sind, so dass die Siebvorrichtung ein zylindrischer Siebkorb ist.

5. Siebvorrichtung nach Anspruch 1 oder 2, dadurch gekennzeichnet, dass die Verstärkungselemente (1) als Ringsegmente ausgebildet sind, so dass die Siebvorrichtung ein Bogensieb, Halbsiebkorb oder dgl. ist.

6. Siebvorrichtung nach Anspruch 1 oder 2, dadurch gekennzeichnet, dass sich die Vertiefungen in den Stäben (32) ausgehend von der mit den Vertiefungen versehenen Oberfläche nach innen hin verjüngen.

7. Siebvorrichtung nach Anspruch 1 oder 2, dadurch gekennzeichnet, dass die Stäbe (2) so geformt und eingesetzt sind, dass die Sortierschlitze im Bereich des Suspensionseintritts einen Querschnitt mit im wesentlichen parallelen geradlinigen Rändern bilden.

8. Siebvorrichtung nach Anspruch 1 oder 2, dadurch gekennzeichnet, dass die Stäbe (2) aus einem gezogenen Profil bestehen.

9. Siebvorrichtung nach Anspruch 1 oder 2, dadurch gekennzeichnet, dass die Stäbe (2) aus einem scharfkantig geschliffenen Profil bestehen.

10. Siebvorrichtung nach Anspruch 1 oder 2, dadurch gekennzeichnet, dass die Stäbe (2) mit einer korrosionsbeständigen und/oder verschleissfesten Beschichtung versehen sind.

11. Siebvorrichtung nach Anspruch 1 oder 2, dadurch gekennzeichnet, dass die Stäbe (2) mit einer die Strömungseigenschaften ihrer Oberfläche verbessernden Beschichtung versehen sind.
